# EUROPÄISCHE PATENTSCHRIFT

(11) **EP 1 872 986 B1**
(45) Veröffentlichungstag und Bekanntmachung des Hinweises auf die Patenterteilung: **18.01.2012**
(21) Anmeldenummer: 06013287.5
(22) Anmeldetag: 28.06.2006
(51) Int. Cl.: B60H 1/22

(54) **Elektrische Heizvorrichtung**
Electrical heating device
Chauffage électrique

(43) Veröffentlichungstag der Anmeldung: 02.01.2008
(60) Teilanmeldung: 09012040.3
(73) Patentinhaber: Eberspächer catem GmbH & Co. KG, 76863 Herxheim bei Landau (DE)
(72) Erfinder: Niederer, Michael, 76889 Kapellen Drusweiler (DE); Walz, Kurt, 76767 Hagenbach (DE); Bohlender, Franz, 76870 Kandel (DE)
(74) Vertreter: Grünecker, Kinkeldey, Stockmair & Schwanhäusser

(56) Entgegenhaltungen:
- EP-A1- 0 899 985
- WO-A-01/70530
- DE-C- 407 558

## Beschreibung

Die vorliegende Erfindung betrifft eine elektrische Heizvorrichtung zur Erwärmung eines strömenden Mediums, wobei im Sinne der vorliegenden Erfindung als Medium insbesondere ein flüssiges Medium zu verstehen ist. Die vorliegende Erfindung betrifft insbesondere eine elektrische Heizvorrichtung für ein Kraftfahrzeug, hier speziell für ein Kraftfahrzeug, welches mit einem Antrieb betrieben wird, der kaum oder keine erhebliche Prozesswärme abgibt. Hierzu gehören insbesondere Hybrid-Antriebe. Dementsprechend soll mit der vorliegenden Erfindung eine Heizvorrichtung angegeben werden, die sich insbesondere dazu eignet, die für die ablaufenden Prozesse in einzelnen Anlagenteile eines Kraftfahrzeuges erforderliche oder zumindest diese fördernde Wärme zu erzeugen. Die erfindungsgemäße Heizvorrichtung soll insbesondere geeignet sein, eine größere Menge von Wärme in kürzester Zeit zu erzeugen, um diese innerhalb kürzester Zeit an die entsprechenden Anlagenteile innerhalb des Kraftfahrzeuges abzugeben. Dabei soll ein Augenmerk der vorliegenden Erfindung darauf gerichtet sein, eine Überhitzung der elektrischen Heizvorrichtung aufgrund von Steuerungsfehlern zu vermeiden.

Es ist im Stand der Technik bekannt, so genannte Widerstandsheizelemente oder auch PTC-Heizelemente in Kraftfahrzeugen einzusetzen, die selbstregelend sind, da diese mit zunehmender Erwärmung einen höheren Widerstand zeigen und somit eine geringere Menge an Strom durchlassen. Die PTC-Heizelemente haben somit selbstregelnde Eigenschaften, die eine Überhitzung dieser verhindern. Die maximale Temperatur, die ein PTC-Widerstand bei gegebener Betriebsspannung erreichen kann, lässt sich durch bestimmte Parameter bei der Herstellung der PTC-Heizelemente beeinflussen, was hier nicht näher erläutert werden muss.

PTC-Heizelemente werden dementsprechend regelmäßig in Radiatoren eingesetzt, die insbesondere der Erwärmung des Fahrgastinnenraumes bei solchen Fahrzeugen dienen, deren Antriebseinheit jedenfalls eine unzureichende Abwärme zur Klimatisierung des Fahrgastinnenraumes abgeben.

Aus der DE 39 07 179 ist eine elektrische Heizvorrichtung mit einem Gehäuse bekannt, in dem eine Vielzahl von PTC-Heizelementen angeordnet sind, die direkt von dem zu erwärmenden flüssigen Medium (hier Wasser) umströmt werden. Die zu den elektrischen Heizelementen führenden elektrischen Anschlusselemente liegen dementsprechend in dem zu erwärmenden Medium frei, was den zu fordernden Sicherheitsanforderungen nicht entspricht und im übrigen das Problem der Korrosion von metallischen Teilen der Anschlusselemente mit sich bringt. Darüber hinaus erschwert die Anordnung der elektrischen Heizelemente direkt in dem Strömungskanal etwaige Wartungs- und Reparaturarbeiten.

Die DE 407558 offenbart als nächster Stand der Technik eine Heizvorrichtung gemäß Oberbegriff des Anspruchs 1.

Der vorliegenden Erfindung liegt das Problem zugrunde, eine den obigen Anforderungen entsprechende elektrische Heizvorrichtung anzugeben, die eine hinreichende Sicherheit bietet und die oben genannte Probleme vermeidet.

Zur Lösung dieses Problems wird mit der vorliegenden Erfindung eine elektrische Heizvorrichtung mit den Merkmalen von Anspruch 1 angegeben.

Die erfindungsgemäße elektrische Heizvorrichtung bietet den Vorteil, dass aufgrund der Trennwand das wärmeabführende Medium, beispielsweise Wasser oder Öl, sicher von dem elektrischen Heizelement getrennt ist. Dementsprechend kann jedes beliebige wärmeabführende Medium zum Einsatz kommen, auch solche Medien, die gegebenenfalls bei direkter Kontaktierung mit dem elektrischen Heizelement dieses beschädigen und/oder einen Kurzschluss hervorrufen können.

Das Gehäuse ist mit Rücksicht auf eine gute Wärmeleitung zwischen dem elektrischen Heizelement und der Zirkulationskammer aus einem gut wärmeleitenden Material, vorzugsweise aus Metall gebildet. Unter den Metallen wird insbesondere Aluminium bevorzugt.

Das elektrische Heizelement umfasst aufgrund der vorstehend bereits beschriebenen Vorzüge wenigstens ein PTC-Heizelement. Dabei liegt das PTC-Heizelement im Hinblick auf eine elektrische Isolierung von dem Gehäuse vorzugsweise unter Zwischenlage wenigstens einer keramischen Platte gegen die Trennwand an. Die keramische Platte ist sehr dünn ausgebildet, so dass die Wärmeleitung von dem PTC-Heizelement zu der Trennwand im wesentlichen nicht nachteilig beeinflusst wird, wohl aber das PTC-Heizelement elektrisch von dem Gehäuse isoliert ist. Es sind auch Ausführungsformen möglich, bei denen die PTC-Heizelemente unmittelbar an einer Wand des Gehäuses anliegen und die elektrische Leitung zu einem Pol der PTC-Heizelemente durch Bestromung des Gehäuses erfolgt, wohingegen ein anderer Kontakt des PTC-Heizelementes elektrisch von dem Gehäuse isoliert ist.

Es hat sich gezeigt, dass bei einer erfindungsgemäßen Ausbildung, bei der das Gehäuse eine größere Länge als Breite hat und die Ein- und Auslassöffnungen in Längsrichtung an gegenüberliegenden Enden des Gehäuses ausgespart sind, eine hinreichend große Wärmemenge von den elektrischen Heizelementen an das Medium übertragen werden kann. Im Hinblick auf eine gleichmäßige und effektive Abgabe der von dem elektrischen Heizelement erzeugten Wärme an das Medium wird gemäß der vorliegenden Erfindung vorgeschlagen, dass die Trennwand wenigstens eine in Längsrichtung des Gehäuses verlaufende Ausnehmung zum Aufnehmen des wenigstens einen elektrischen Heizelementes in der Heizkammer ausbildet, die in die Zirkulationskammer hineinragt, zu der Heizkammer offen ist und beidseitig von dem Medium umströmt wird. Im Hinblick auf eine gute Wärmeübertragung von dem elektrischen Heizelement an das Medium hat das elektrische Heizelement vorzugsweise eine Dicke, die in etwa der Breite der Ausnehmung entspricht. Es sind eine Vielzahl von Ausnehmungen in Breitenrichtung des Gehäuses parallel hintereinander angeordnet, wodurch die durch die elektrische Heizvorrichtung übertragene Menge erheblich gesteigert werden kann. Die Ausnehmung weist einen in etwa U-förmigen Querschnitt auf, wobei die durch die gegenüberliegenden Schenkel gebildeten Innenseiten der Ausnehmung vorzugsweise plan sind. Im Hinblick auf die Verwendung von identischen elektrischen Heizelementen zum einfachen Aufbau einer Heizvorrichtung mit hoher Wärmeleistung sind die U-förmigen Ausnehmungen im wesentlichen mit gleicher Tiefe ausgebildet, d.h. die einander gegenüberliegenden Schenkel der U-förmigen Ausnehmung verbindenden Stege enden auf gleicher Höhe, so dass die Ausnehmungen gleich tief in die Zirkulationskammer hineinragen. Diese Ausnehmungen enden vorzugsweise kurz vor den der Heizkammer gegenüberliegenden Boden der Zirkulationskammer. Zur bestmöglichen Verwendung von Standardteilen bei der Ausbildung der elektrischen Heizelemente sind in jeder der Ausnehmungen eine Vielzahl von elektrischen Heizelementen hintereinander aufgenommen. Das untere Ende der Heizelemente wird vorzugsweise durch Anlage an dem Steg auf Höhe gehalten.

Insbesondere bei der Verwendung von PTC-Heizelementen sollte im Hinblick auf die selbstregelnden Eigenschaften dieser elektrischen Heizelemente ein möglichst gleichförmiger Wärmeübergang zu beiden Seiten von flächenförmig ausgebildeten PTC-Heizelementen gewährleistet werden. Dementsprechend wird gemäß der vorliegenden Erfindung vorgeschlagen, das elektrische Heizelement bei Aufnahme in der U-förmigen Ausnehmung durch ein ebenfalls in die Ausnehmung eingebrachtes Druckelement in guter Anlage gegen die einander gegenüberliegenden Schenkel der Ausnehmung zu drücken. Vorzugsweise sind die elektrischen Heizelemente ebenso wie die einander gegenüberliegenden Schenkel vollkommen eben und verlaufen vorzugsweise leicht konisch aufeinander zu, wobei auch das Druckelement keilförmig ausgebildet sein sollte, so dass das Druckelement das Heizelement in der Ausnehmung verkeilt und eine vollflächige Anlage zwischen den Längsseiten der U-förmigen Ausnehmung, dem Heizelement und dem Keil sicherstellt. Die elektrischen Heizelemente liegen gegen zumindest einen Schenkeln an, wobei diese im Hinblick auf eine elektrische Isolierung von dem Gehäuse die elektrischen Heizelement nicht unmittelbar an den Schenkeln anliegen müssen, sondern werden vorzugsweise durch eine dünne keramische Platte elektrisch von dem Gehäuse isoliert. Mit Rücksicht auf einen verbesserten Schutz vor Kurzschluss sind an beiden Seiten der flächig ausgebildeten elektrischen Heizelemente dünne elektrisch isolierende Platten angeordnet, die jedoch die Wärmeübertragung von den elektrischen Heizelementen an die Trennwand speziell an die gegenüberliegenden Schenkel der U-förmigen Ausnehmung nur unwesentlich behindern.

Das Druckelement ist ebenfalls aus einem gut wärmeleitenden Material gebildet und liegt vorzugsweise vollflächig gegen das Heizelement an, gegebenenfalls unter Zwischenlage der elektrisch isolierenden Platte. Hierdurch wird zu beiden Seiten des elektrischen Heizelementes eine gute Wärmeleitung durch die einander gegenüberliegenden Schenkel der U-förmigen Ausnehmung zur Übertragung an das Medium in der Zirkulationskammer gewährleistet. Das Druckelement wird hierzu mit hoher Kraft in die U-förmige Ausnehmung eingepresst, um das elektrische Heizelement in der Ausnehmung zu verspannen, und zwar durch Einführen des Druckelementes in Längsrichtung von plattenförmigen elektrischen Heizelementen. Die späteren Druckflächen des elektrischen Heizelementes sollten hierzu eben und glatt sein. Bei hohen Einpresskräften ist es zu bevorzugen, das Druckelement gegen eine durch eine Keramikplatte gebildete elektrisch isolierende Platte einzuschieben, deren Oberfläche der Einschiebebewegung des Druckelementes einen geringeren Reibwiderstand entgegensetzt. Praktische Versuche haben gezeigt, dass die Einpresskraft zum Einbringen des Druckelementes zu einem Heizelement mehrere hundert Newton beträgt. Nicht zuletzt aus diesem Grund ist es zu bevorzugen, mehrere elektrische Heizelemente in Längsrichtung der Ausnehmung hintereinander anzuordnen, die jeweils für sich durch separate Druckelemente in der Ausnehmung verspannt sind. Das Druckelement hat vorzugsweise eine Grundfläche, die der Grundfläche des elektrischen Heizelementes entspricht, so dass von dem Heizelement erzeugte Wärme in Querrichtung ungestört in die Schenkel geleitet werden kann.

Zwischen den elektrisch isolierenden Platten und dem dazwischen angeordneten, wenigstens eine PTC-Heizelement sind jeweils beidseitig des PTC-Heizelementes vorzugsweise elektrische Kontaktbleche vorgesehen, welche elektrisch mit den PTC-Heizelementen kontaktiert sind. Die Kontaktbleche weisen vorzugsweise einstückig daran angeformte Verlängerungsabschnitte auf, die an diagonal gegenüberliegenden Seiten des Heizelementes die elektrisch isolierenden Platten überragen. Durch die diagonal versetzte Anordnung der Verlängerungsabschnitte wird zum einen verhindert, dass sich diese lediglich beabstandet durch die Dicke der PTC-Heizelemente einander gegenüberliegen, so dass die Gefahr einer Kurzschlussbildung weiter verringert und darüber hinaus ist der elektrische Anschluss der Verlängerungsabschnitte an eine Stromquelle, auch unter Berücksichtigung einer hinreichenden Sicherheit gegen Kurzschluss vereinfacht. Die Größe der Fläche der zwischen den isolierenden Platten angeordneten Kontaktbleche entspricht im Hinblick auf eine bestmögliche elektrische Kontaktierung der PTC-Heizelemente im wesentlichen der zu der Innenseite der isolierenden Platte zeigenden Außenfläche des wenigstens einen PTC-Heizelementes. Dementsprechend liegt jedes der PTC-Heizelemente vollflächig an den Kontaktblechen an. Demgegenüber bilden die isolierenden Platten auch im Hinblick auf eine hinreichende Beabstandung der Heizelemente von dem Gehäuse am Umfang der Heizelemente einen leicht überstehenden Rand aus. Das elektrische Heizelement kann ein oder mehrere PTC-Heizelemente aufweisen. Insbesondere bei einer Spannung über 230 V wird die Verwendung mehrerer PTC-Heizelemente bevorzugt, um diese PTC-Heizelemente als Parallelwiderstände schalten zu können. Hierdurch muss der bei dem einzelnen PTC-Heizelement realisierte Widerstand nicht unnötig abgesenkt werden, was zu einer verminderten Durchbruchspannung führen kann. Bei einer Spannung < 230 V wird vorzugsweise ein einziges PTC-Heizelement in einem elektrischen Heizelement verwirklicht.

Wie bereits vorstehend erwähnt, erfolgt über die die isolierenden Platten überragenden Verlängerungsabschnitte der elektrische Anschluss der PTC-Heizelemente. Im Hinblick auf einen möglichst einfachen Anschluss der jeweiligen Verlängerungsabschnitte sind diese in der Ausnehmung angeordneten Verlängerungsabschnitte im wesentlichen höhengleich angeordnet und das Gehäuse weist im Bereich der Verlängerungsabschnitte wenigstens eine Auflagefläche für eine Leiterplatte auf, die an ihrer den Verlängerungen zugewandten Unterseite Kontaktaufnahmen aufweist, in die die Verlängerungsabschnitte einschiebbar sind. Bei einer Anordnung von mehreren Heizelementen in der Ausnehmung hintereinander, können gemäß einer bevorzugten Weiterbildung der vorliegenden Erfindung die jeweiligen Verlängerungsabschnitte auf einfache Weise dadurch kontaktiert werden, dass die Kontaktaufnahme für mehrere in Reihe hintereinander angeordnete Verlängerungsabschnitte durch einander gegenüberliegende und unter Vorspannung an den Verlängerungsabschnitten anliegende Kontaktbleche gebildet ist. Diese Kontaktbleche erstrecken sich dementsprechend im wesentlichen parallel zu den Verlängerungsabschnitten und werden bei zwischen die Kontaktbleche eingeschobenen Verlängerungsabschnitten unter Vorspannung gegen die Verlängerungsabschnitte gepresst, so dass eine gute Kontaktierung gewährleistet ist. Die Kontaktierung kann auf einfache Weise dadurch erreicht werden, dass die Leiterplatte in Längsrichtung der Verlängerungsabschnitte auf diese aufgeschoben wird, bis die Leiterplatte direkt vorzugsweise unter Zwischenlage von elektrischen Bauteilen oder einer Kühlleiste für diese Bauteile, auf der Anlagefläche des Gehäuses aufliegen.

Insbesondere beim Einsatz der Heizvorrichtung in dem Motorraum eines Kraftfahrzeuges und zur Abdichtung der Heizkammer wird gemäß einer bevorzugten Weiterbildung der vorliegenden Erfindung vorgeschlagen, eine Abdeckung vorzusehen, die einen Strom- und Signalanschluss aufweist und durch die die Heizkammer abgedichtet ist. Diese Abdeckung hat ferner Kontaktelemente, die mit an der Oberseite der Leiterplatte ausgebildeten Steckelementen zusammenwirken. Die Kontaktelemente sind vorzugsweise beim Aufsetzen der Abdeckung kontaktierend ineinander einschiebbar und erstrecken sich vorzugsweise parallel zu den Verlängerungsabschnitten, so dass die Aufsetzbewegung der Abdeckung in Längsrichtung der Verlängerungsabschnitte nicht nur zu einer Kontaktierung der Kontaktelemente, die zu dem Strom- und Signalanschluss führen, sondern auch zu einer guten Aufnahme der Verlängerungsabschnitte an der gegenüberliegenden Seite der Leiterplatte führt.

Die erfindungsgemäße elektrische Heizvorrichtung eignet sich insbesondere als Heizvorrichtung für einen Hybrid-Antrieb eines Fahrzeuges. Darüber hinaus eignet sich die erfindungsgemäße Heizvorrichtung auch als Rekuperator zur Ableitung überschüssiger Energie, welche durch Generatorbetrieb eines Elektromotors beim regenerativen Bremsvorgang entsteht. Eine solche überschüssige elektrische Energie wird zunächst zum Auffüllen eines an dem Fahrzeug vorgesehenen elektrischen Speichers (Batterie) genutzt. Wenn aber auch dieser Speicher vollständig geladen ist, muss elektrische Energie abgeleitet werden und hierzu eignet sich insbesondere die erfindungsgemäße elektrische Heizvorrichtung, durch die elektrische Energie in thermische Energie umgeformt wird, die beispielsweise über Wärmetauscher an die Umgebung abgegeben oder für die Innenraumheizung genutzt werden kann.

Die vorliegende Erfindung wird nachfolgend anhand eines Ausführungsbeispiels in Verbindung mit der Zeichnung näher erläutert. In dieser zeigen:
- Figur 1: eine perspektivische Draufsicht auf einen Teil des Ausführungsbeispiels bei geöffneter Abdeckung;
- Figur 2: eine perspektivische Draufsicht auf den unteren Teil des Gehäuses bei abgenommenem Gehäuseboden;
- Figur 3: eine Längsschnittansicht durch das in Figur 1 gezeigte Ausführungsbeispiel;
- Figur 4: eine perspektivische Draufsicht auf ein Ausführungsbeispiel eines elektrischen Heizelementes, welches in der Heizvorrichtung nach den Figuren 1 bis 3 Verwendung findet;
- Figur 5: zwei auf das in Figur 1 gezeigte Teil aufzusetzende Platten;

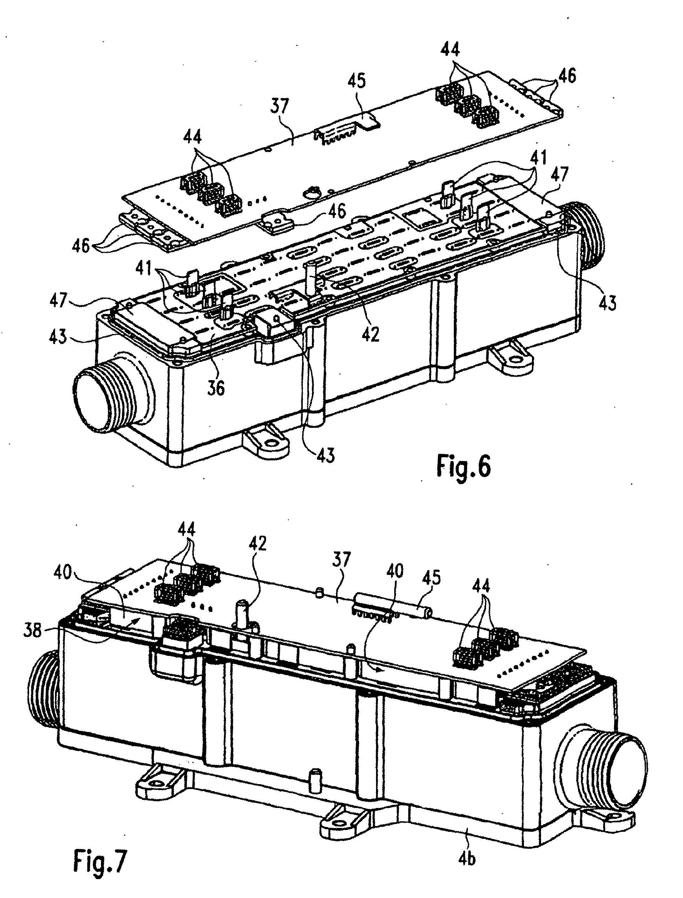

- Figur 6: das Ausführungsbeispiel nach Figur 1 bei auf das Teil aufgesetzten Platten gemäß Figur 5;
- Figur 7: das Ausführungsbeispiel nach Figur 1 bei aufgesetzter zweiter Leiterplatte; und

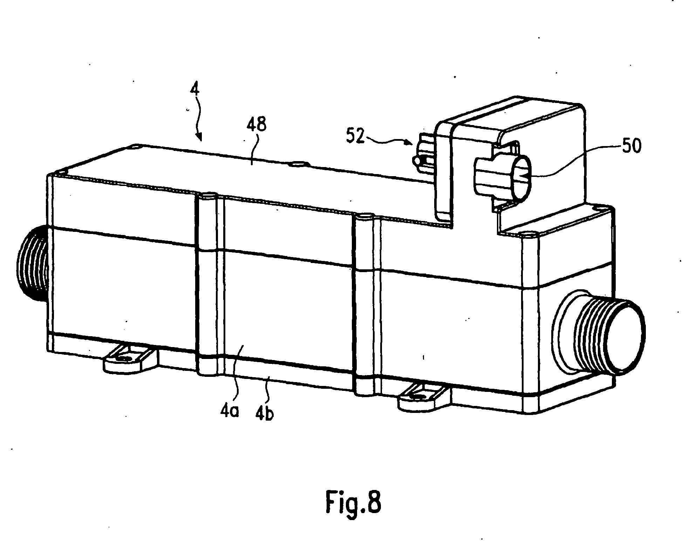

- Figur 8: das in den vorherigen Figuren gezeigte Ausführungsbeispiel bei aufgesetzter Abdeckung.

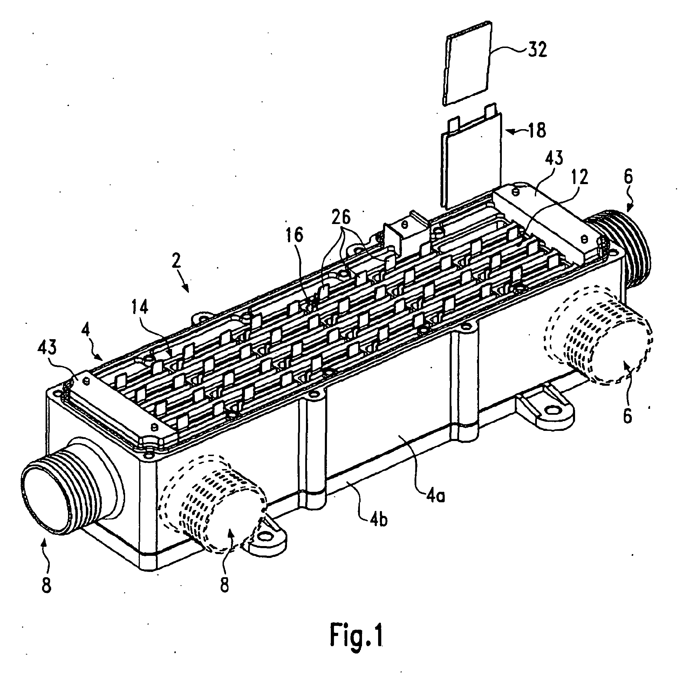

Die Figur 1 zeigt das Ausführungsbeispiel einer Heizvorrichtung 2 mit einem länglichen Gehäuse 4 bestehend aus einem im wesentlichen zylindrischen Gehäuserahmen 4 und einem daran angeschraubten Gehäuseboden 4b. An einer Seitenfläche des Gehäuserahmens 4a sind an gegenüberliegenden Enden dieses länglichen Gehäuserahmens 4a Stutzen angeordnet, welche Ein- und Auslassöffnungen 6, 8 umgeben und an welche über Schlauchklemmen oder dergleichen Anschlussleitungen anschließbar sind, die zu einer im wesentlichen von dem Gehäuserahmen 4a umgebenen Zirkulationskammer 10 führen. In Figur 1 sind die Stutzen an den stirnseitigen Enden des Gehäuserahmens 4a angeordnet. Eine andere Anordnung der Stutzen an den gegenüberliegenden Enden des länglichen Gehäuserahmens 4a ist mit gestrichelten Linien angedeutet. Diese Zirkulationskammer 10 wird durch eine Trennwand 12 von einer darüberliegenden Heizkammer 14 getrennt, und zwar derart, dass das in der Zirkulationskammer 10 enthaltene Fluid (beispielsweise Wasser) nicht in die Heizkammer 14 gelangen kann. Die Trennwand 12 kann beispielsweise einstückig an dem Gehäuserahmen 4a angeformt sein.

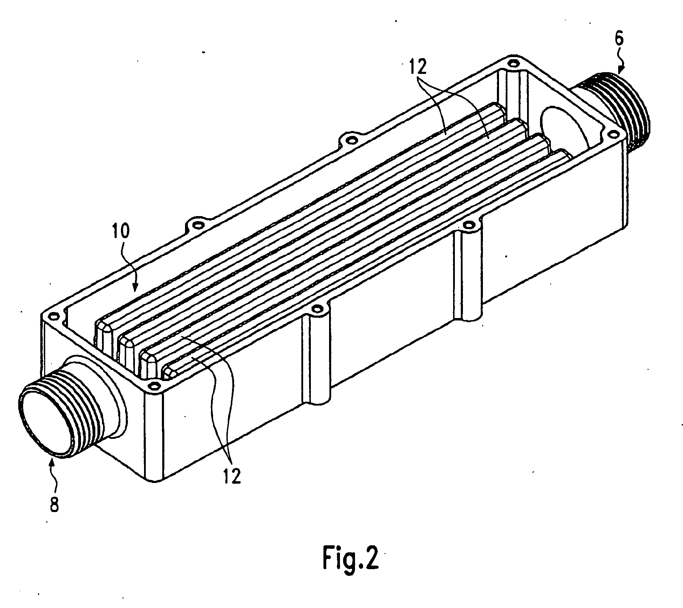

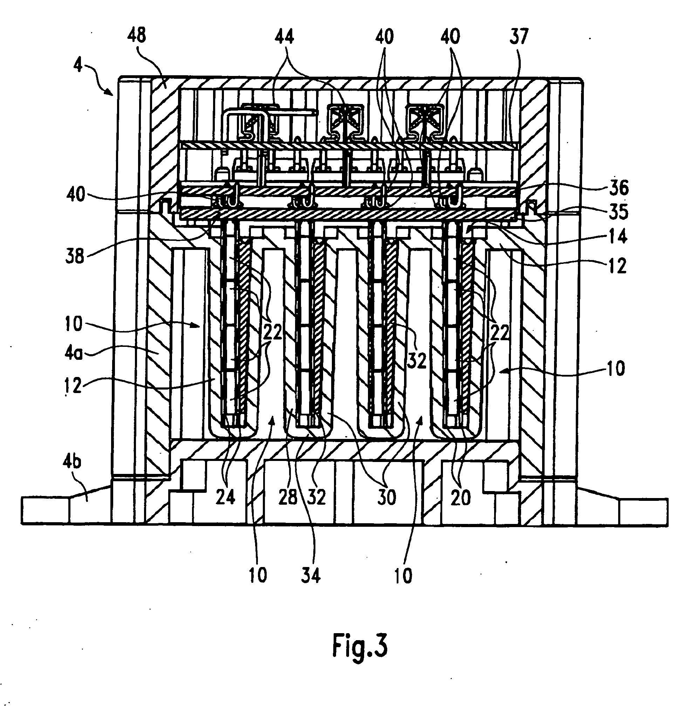

Wie Figur 3 verdeutlicht, bildet die Trennwand 12 mehrere in Breitenrichtung hintereinander angeordnete Ausnehmungen 16 aus, die sich im wesentlichen über die gesamte Länge des Gehäuses 4 erstrecken (vgl. Figur 2). Die Trennwand 12 weist dementsprechend eine mäandrierende Form mit tief in die Zirkulationskammer 10 hineinragenden Ausnehmungen 16 auf, die gegenüber der Zirkulationskammer 10 vollkommen abgedichtet und zu der Heizkammer 14 offen sind. Da diese Ausnehmungen 16 vorzugsweise aus einem gut leitenden Material, insbesondere Metall und hier speziell Aluminium gefertigt sind, bietet es sich an, die Trennwand 12 beispielsweise als separates Bauteil und mittels Umformen herzustellen. Die Ausnehmungen 16 haben einen U-förmigen Querschnitt und verlaufen in Längsrichtung des Gehäuses 4 parallel zueinander.

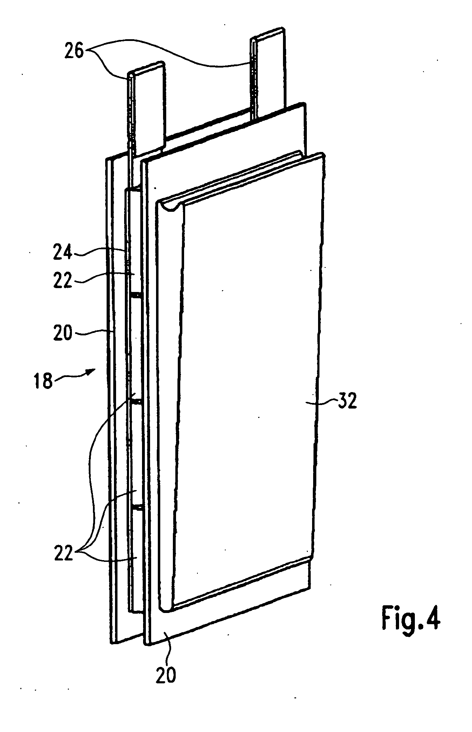

In jeder der Ausnehmungen 16 befinden sich Heizelemente 18, welche den in Figur 4 gezeigten Aufbau aufweisen. Die Außenseite der jeweiligen Heizelemente 18 wird durch keramische Platten 20 gebildet. Zwischen diesen keramischen Platten sind vorliegend mehrere PTC-Heizelemente 22 angeordnet. Wiederum zwischen diesen PTC-Heizelementen 22 und den keramischen Platten 20 befinden sich Kontaktbleche 24 aus einem elektrisch leitenden Material. Einstückig an diesen Kontaktblechen 24 angeformt sind Verlängerungsabschnitte 26. Die Verlängerungsabschnitte 26 der einander gegenüberliegenden Kontaktbleche befinden sich an diagonal gegenüberliegenden Seiten. Die Verlängerungsabschnitte sind dementsprechend nicht nur aufgrund der Dicke der PTC-Heizelemente 22 voneinander beabstandet, sondern darüber hinaus auch im wesentlichen durch die Breite der Heizelemente 18 voneinander entfernt. Zur Verstärkung sind die Verlängerungsabschnitte 26 durch einmaliges Falten des Materials der Kontaktbleche 24 in der Dicke aufgedoppelt.

Die keramischen Platten 20, die PTC-Heizelemente 22 und die Kontaktbleche 24 sind vorzugsweise durch Kleben zu einer Einheit verbunden. Wie Figur 4 verdeutlicht, überragen die keramischen Platten 20 die PTC-Heizelemente 22 und die Kontaktbleche 24 allseitig zur Ausbildung eines umlaufenden Randes. Die in die Ausnehmungen 16 eingebrachten elektrischen Heizelemente 18 liegen mit einer der keramischen Platten 20 an einem Schenkel 28 der U-förmigen Ausnehmung 16 an. Zwischen dem gegenüberliegenden Schenkel 30 und dem Heizelement 18 befindet sich ein Druckelement 32, welches unter Spannung in die Ausnehmung 16 eingebracht und einem einzelnen elektrischen Heizelement 18 zugeordnet ist. Durch das jeweilige Druckelement 32 wird ein einziges Heizelement 18 in der Ausnehmung 16 gehalten und gegen die gegenüberliegenden Schenkel 28, 30 der Ausnehmung 16 verspannt. Dementsprechend liegt das Heizelement 18 mit guter Wärmeleitung gegen die gegenüberliegenden Schenkel 28, 30 an. Ferner stehen die Heizelemente 18 auf einem die Schenkel 28, 30 verbindenden Steg 34 der Ausnehmung 16 auf und sind dementsprechend höhenmäßig festgelegt. Das elektrische Heizelement 18 liegt mit den unteren Stirnseiten der keramischen Platten 20 an dem Steg 34 an, so dass die elektrisch leitenden Teile des Heizelementes 18 von dem metallischen Steg 34 beabstandet und somit isoliert sind. Die Tiefe der Ausnehmungen 16 ist ferner so gewählt, dass das Heizelement 18 zumindest über die Höhe der übereinander gestapelten PTC-Heizelemente 22 von dem Medium in der Zirkulationskammer 16 umströmt wird, d.h. das gesamte elektrische Heizelement 18 in der Ausnehmung 16 aufgenommen ist.

Die U-förmigen Ausnehmungen 16 haben einen leicht konisch zulaufenden Querschnitt. Das Druckelement 32 ist ebenfalls keilförmig ausgebildet; und zwar mit einer den konischen Verlauf der Ausnehmung 16 entsprechenden Steigung. Die Dicke des Druckelementes 32 und des elektrischen Heizelementes 18 entspricht im wesentlichen Breite der jeweiligen Ausnehmung 16.

Das Druckelement 32 besteht aus einem gut wärmeleitenden Material, beispielsweise Aluminium und die Dicke der keramischen Platten 20 ist so gewählt, dass die Wärmeleitung von den Heizelementen 18 durch das Material der Schenkel 28, 30 kaum beeinträchtigt wird. Aufgrund der hohen Verpressung der Heizelemente 18 zusammen mit dem Druckelement 32 ergibt sich eine nahezu symmetrische Wärmeabfuhr zu beiden Seiten der länglichen Ausnehmungen 16.

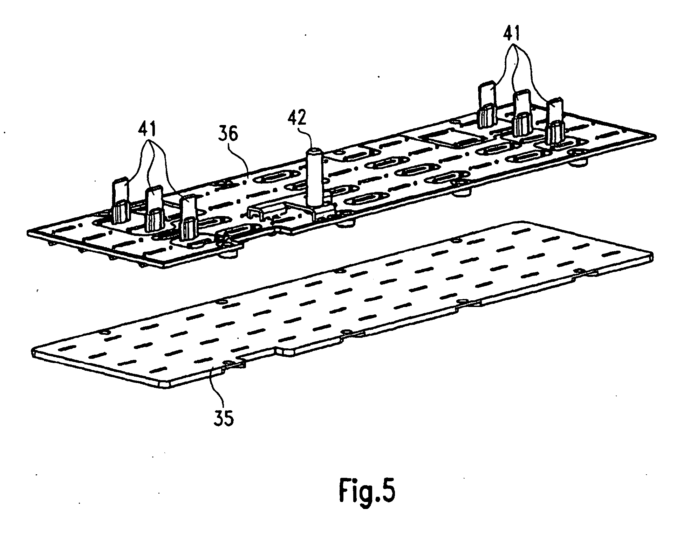

Wie Figur 1 zu entnehmen ist, überragen die Verlängerungsabschnitte 34 die Oberseite der Trennwand 12 und liegen in der Heizkammer 14 frei. Auf diese Verlängerungsabschnitte 26 werden die in Figur 5 gezeigten Platten, nämlich eine Isolierplatte 35 und eine erste Leiterplatte 36 aufgeschoben. Die Isolierplatte 35 ist aus einem elektrisch isolierenden Material und weist ein der Größe und Lage der Verlängerungsabschnitte entsprechendes Lochmuster auf. Die in der Isolierplatte 35 ausgesparten Öffnungen für die Verlängerungsabschnitte 26 dienen der Führung der Verlängerungsabschnitte 26 und der sicheren Isolierung. Ferner weist die Isolierplatte 35 Aussparungen und Aufnahmen für von der ersten Leiterplatte 36 vorstehende Teile der ersten Leiterplatte 36 auf.

Die erste Leiterplatte 36 weist zu jeder Ausnehmung 16 zwei Kontaktaufnahmen 38 auf, die durch gebogene und unter Vorspannung die Verlängerungsabschnitte 26 aufnehmende Verlängerungsabschnittaufnahmen 40 gebildet sind (vgl. insbesondere Figur 3). Bei einer alternativen, hier nicht dargestellten Ausgestaltung können die Kontaktaufnahmen auch durch zwei gegenüberliegende Kontaktbleche gebildet sein, deren lichter Abstand so gewählt ist, dass die in den Kontaktaufnahmen aufgenommen Verlängerungsabschnitte unter Vorspannung gegen die Kontaktbleche anliegen. In einem solchen Fall sind mehrere Verlängerungsabschnitte von hintereinander angeordneten elektrischen Elementen über die Kontaktbleche in Reihe geschaltet. Bei dem gezeigten Ausführungsbeispiel erfolgt die elektrische Gruppierung von Heizelementen 18 durch Leiterbahnen der ersten Verteilerplatte 36, die dementsprechend auch als Leiterplatte bezeichnet wird.

Die erste Leiterplatte 36 wird auf der den Heizelementen 18 abgewandten Oberseite durch sechs Steckzungenelemente 41 sowie ein zylindrisches Anschlusselement 42 für die Plusphase überragt, die jeweils an der ersten Leiterplatte 36 angeordnet sind. Die erste Leiterplatte 36 liegt in etwa auf Höhe von Auflageflächen 43, die an den stirnseitigen Enden des Gehäuserahmens 4a vorgesehen sind. Die erste Leiterplatte 36 weist keine elektronischen Bauteile auf, sondern lediglich Leiterbahnen und die vorerwähnten Anschlusselemente 41, 42 und so dient die erste Leiterplatte 36 als Verteilerplatte lediglich der Zusammenfassung von einzelnen elektrischen Heizelementen 18 zu Gruppen im Hinblick auf eine Steuerung sämtlicher elektrischer Heizelemente einer Gruppe.

Die zweite Leiterplatte 37 hat sechs den Kontaktzungenelementen 41 zugeordnete Steckkontaktaufnahmen 44, die an der Oberseite der zweiten Leiterplatte 37 angeordnet sind. Ferner ist auf der Oberseite der zweiten Leiterplatte 37 ein Minus-Anschlusselement 45 vorgesehen. An ihrer Unterseite trägt die zweite Leiterplatte 37 elektrische Schaltelemente, insbesondere Halbleiterschalter 46, welche die zweite Leiterplatte 37 stirnseitig bzw. endseitig überragen und unter Zwischenlage einer Isolierschicht 47 gegen die Anlageflächen 43 anliegen, so dass durch den so geschaffenen unmittelbaren Kontakt die Möglichkeit besteht, von den Halbleiterschaltern 46 erzeugte Verlustwärme durch Leitung in das Gehäuse 4 abzuleiten, nachdem die zweite Leiterplatte 37 mit Abstand zu der ersten Leiterplatte 36 montiert worden ist. Die Kontaktzungenelemente 41 greifen dann in die entsprechenden Steckkontaktaufnahmen 44 ein. Das Plus-Anschlusselement 42 durchragt eine an der zweiten Leiterplatte 37 ausgesparte Ausnehmung und überragt die zweite Leiterplatte 37. An den beiden Anschlusselementen 42 und 45 erfolgt die nachfolgende Kontaktierung beim Aufsetzen einer Gehäuseabdeckung 48. Diese weist an ihrer Oberseite einen Stromanschluss 50 und einen Signalanschluss 52 auf und dient der Abdichtung der Heizkammer 14 gegenüber der Umgebung.

Das in der Zeichnung gezeigte Ausführungsbeispiel hat 24 Heizelemente mit jeweils vier PTC-Heizelementen und es hat sich überraschenderweise gezeigt, dass diese elektrische Heizvorrichtung eine thermische Wärmeleistung von bis über 10 kW abgeben kann. Mit dieser Leistung lässt sich die durch den Generatorbetrieb entstehende und nicht speicherbare Energie eines Elektroantriebes über die Heizvorrichtung in thermische Energie umwandeln.

### Bezugszeichenliste

- 2: Heizvorrichtung
- 4: Gehäuse
- 4a: Gehäuserahmen
- 4b: Gehäuseboden
- 6: Einlassöffnung
- 8: Auslassöffnung
- 10: Zirkulationskammer
- 12: Trennwand
- 14: Heizkammer
- 16: Ausnehmung
- 18: Heizelement
- 20: keramische Platte
- 22: PTC-Heizelement
- 24: Kontaktblech
- 26: Verlängerungsabschnitt
- 28: Schenkel
- 30: Schenkel
- 32: Druckelement
- 34: Steg
- 35: Isolierplatte
- 36: erste LeiterplatteNerteilerplatte
- 37: zweite Leiterplatte
- 38: Kontaktaufnahme
- 40: Verlängerungsabschnittaufnahme
- 41: Kontaktzungenelemerite
- 42: Plus-Anschlusselement
- 43: Anlagefläche
- 44: Steckkontaktaufnahme
- 45: Minus-Anschlusselement
- 46: Halbleiterschalter
- 47: Isolierschicht
- 48: Gehäuseabdeckung
- 50: Stromanschluss
- 52: Signalanschluss

## Patentansprüche

1. Elektrische Heizvorrichtung (2) mit wenigstens einem elektrischen Heizelement (18) und wenigstens einer U-förmigen Ausnehmung (16), in der das elektrischen Heizelement (18) aufgenommen ist und die eine von einem Medium durchströmte Zirkulationskammer (10) begrenzt, die eine Einlassöffnung (6) zum Einführen des Mediums in die Zirkulationskammer (10) und eine Auslassöffnung (8) zum Ausführen des erwärmten Mediums aus der Zirkulationskammer (10) aufweist,
**gekennzeichnet durch**
ein längliches Gehäuse (4), in welchem eine Trennwand (12) ausgebildet ist, die das Gehäuse (4) in eine Heizkammer (14) und die Zirkulationskammer (10) unterteilt, in welche mehrere in Breitenrichtung des Gehäuses (4) parallel hintereinander angeordnete, sich in Längsrichtung des Gehäuses (4) erstreckende und **durch** die Trennwand (12) ausgebildete U-förmige Ausnehmungen (16) in Richtung auf einen Boden des Gehäuses (4) hineinragen, die beidseitig von dem Medium umströmt werden und die zu der Heizkammer (14) offen sind, wobei zwischen einem der Schenkel (30) der U-förmigen Ausnehmung (16) und dem elektrischen Heizelement (18) ein Druckelement (32) angeordnet ist, welches flächig gegen ein das elektrische Heizelement (18) ausbildendes PTC-Heizelement (16) und den Schenkel (30) anliegt.

2. Elektrische Heizvorrichtung nach Anspruch 1, **dadurch gekennzeichnet, dass** die Dicke des elektrischen Heizelementes (18) in etwa der Breite der Ausnehmung (16) entspricht.

3. Elektrische Heizvorrichtung nach Anspruch 1, **dadurch gekennzeichnet, dass** die Ausnehmungen (16) mit gleicher Eindringtiefe in die Zirkulationskammer (10) hineinragen.

4. Elektrische Heizvorrichtung nach einem der vorherigen Ansprüche, **dadurch gekennzeichnet, dass** in jeder der Ausnehmungen (16) mehrere elektrische Heizelemente (18) in Längsrichtung der Ausnehmung hintereinander aufgenommen sind.

5. Elektrische Heizvorrichtung nach einem der vorherigen Ansprüche, **dadurch gekennzeichnet, dass** das elektrische Heizelement auf einem Steg der U-förmigen Ausnehmung aufsteht.

6. Elektrische Heizvorrichtung nach einem der vorherigen Ansprüche, **dadurch gekennzeichnet, dass** das Druckelement (32) wie eine keilförmige Platte mit guter Wärmeleitfähigkeit gebildet ist und dass das elektrische Heizelement (18) flächig und unter einer durch das Druckelement aufgebrachten Spannung gegen den anderen Schenkel (28) der U-förmigen Ausnehmung (16) anliegt.

7. Elektrische Heizvorrichtung nach einem der vorherigen Ansprüche, **dadurch gekennzeichnet, dass** das elektrische Heizelement (16) zwei parallel zueinander angeordnete elektrisch isolierende Platten (20), wenigstens ein zwischen diesen Platten (20) angeordnetes PTC-Heizelement (22) und zwei Kontaktbleche (24) umfasst, welche beidseitig an den wenigstens einem PTC-Heizelement (22) anliegen und zwischen diesem und den elektrisch isolierenden Platten (20) angeordnet sind.

8. Elektrische Heizvorrichtung nach Anspruch 7, **dadurch gekennzeichnet, dass** die Kontaktbleche (24) jeweils diagonal gegenüberliegende Verlängerungsabschnitte (26) aufweisen, die das obere Ende der elektrisch isolierenden Platten (20) überragen, wobei die Größe der Fläche der zwischen den isolierenden Platten (20) angeordneten Kontaktbleche jeweils der zu der Innenseite der isolierenden Platte (20) zeigenden Außenfläche des wenigstens einen PTC-Heilzelementes (22) entspricht.

9. Elektrische Heizvorrichtung nach Anspruch 8, **dadurch gekennzeichnet, dass** die oberen Enden der jeweiligen Verlängerungsabschnitte der in der Ausnehmung (16) angeordneten elektrischen Heizelemente (18) höhengleich angeordnet sind und im Bereich der Verlängerungsabschnitte wenigstens eine Auflagefläche (43) für eine Leiterplatte (36) vorgesehen ist, die an ihrer den Verlängerungsabschnitten (36) zugewandten Unterseite Kontaktaufnahmen (38) aufweist, in die die Verlängerungsabschnitte (26) einschiebbar sind.

10. Elektrische Heizvorrichtung nach Anspruch 9, **dadurch gekennzeichnet, dass** die Kontaktaufnahme (38) für die Verlängerungsabschnitte (26) von mehreren in einer Reihe hintereinander angeordneten elektrischen Heizelementen (18) durch einander gegenüberliegende und unter Vorspannung an den Verlängerungsabschnitten (26) anliegenden Kontaktblechen gebildet ist.

11. Elektrische Heizvorrichtung nach einem der vorherigen Ansprüche, **dadurch gekennzeichnet, dass** die Vorrichtung ferner eine einen Strom- und Signalanschluss aufweisende Abdeckung (48) umfasst, durch die die Heizkammer (14) abgedichtet ist und welche mit an der Oberseite der Leiterplatte ausgebildeten Kontaktelementen zusammenwirkende Kontaktgegenelemente trägt.

12. Elektrische Heizvorrichtung nach Anspruch 11, **dadurch gekennzeichnet, dass** die Kontaktelemente und die Kontaktgegenelemente beim Aufsetzen der Abdeckung (48) auf das Gehäuse (4) kontaktierend ineinander einschiebbar sind.

## Claims

1. Electric heating device (2) comprising:
at least one electric heating element (18) and at least one U-shaped recess (16) receiving the electric heating element (18) and delimitates a circulation chamber (10) through which a medium flows and which comprises an inlet opening (6) for introducing the medium into the circulation chamber (10) and an outlet opening (8) for exiting warmed up fluid out from the circulation chamber (10),
**characterized by**
a longitudinal housing (4), in which a separating wall (12) is formed that divides the housing (4) into a heating chamber (14) and the circulation chamber (10); in which multitude of U-shaped recesses (16) are formed along the width of the housing (4) parallel to each other and one behind the other, and which U-shaped recesses (16) are formed by means of the separating wall (12), which protrude into the circulation chamber (10) towards a ground of the housing (4), which are passed by the medium on both sides and are open to the heating chamber (14),
wherein a pressure element (32) is arranged between one of the side pieces (30) of the U-shaped recess (16) and the electric heating element (18), wherein said pressure element (32) lies flat against a PTC heating element forming the electric heating element (18) and the side piece (30).

2. Electric heating device according to claim 1, **characterised in that** the thickness of the electric heating element (18) roughly corresponds to the width of the recess (16).

3. Electric heating device according to claim 1, **characterised in that** the recesses (16) project into the circulation chamber (10) with an equal penetration depth.

4. Electric heating device according to one of the preceding claims, **characterised in that** a number of electric heating elements (18), one behind the other, are held in each of the recesses (16) along the length of the recess.

5. Electric heating device according to one of the preceding Claims, **characterised in that** the electric heating element stands on a tab of the U-shaped recess.

6. Electric heating device according to one of the preceding claims, **characterised in that** the pressure element (32) is formed as a wedge-shaped plate with good thermal conductivity and that the electric heating element (18) lies flat against the other side piece (28) of the U-shaped recess (16) and under tension introduced by the pressure element.

7. Electric heating device according to one of the preceding claims, **characterised in that** the electric heating element (16) comprises two electrically insulating plates (20) arranged parallel to one another, at least one PTC heating element (22) arranged between these plates (20) and two contact plates (24), which lie against both sides of the at least of one PTC heating element (22) and are arranged between this and the electrically insulating plates-(20).

8. Electric heating device according to claim 7, **characterised in that** the contact plates (24) each have diagonally opposing extension sections (26) that project beyond the upper end of the electrically insulating plates (20), wherein the size of the surface area of the contact plates arranged between the insulating plates (20) corresponds to the outer surface of the at least one PTC heating element (22) facing the interior side of the insulating plate (20) in each case.

9. Electric heating device according to claim 8, **characterised in that** the upper ends of the respective extension sections are arranged at the same height as the electric heating elements (18) arranged in the recess (16) and, in the area of the extension sections, at least one support surface (43) is provided for a printed circuit board (36), wherein the printed circuit board (36) has contact receptacles (38) on its underside that faces the extension sections (36), wherein the extension sections (26) can be slid into the contact receptacles (38).

10. Electric heating device according to claim 9, **characterised in that** the contact receptacle (38) for the extension sections (26) of a number of electric heating elements (18) arranged in a row, one behind the other, is formed by contact plates that lie opposite one another and that lie on the extension sections (26) with an initial tension.

11. Electric heating device according to one of the preceding claims, **characterised in that** the device furthermore comprises a cover (48) having a power and signal terminal, wherein this cover (48) seals the heating chamber (14) and bears contact counter-elements that interact with the contact elements formed on the top side of the printed circuit board.

12. Electric heating device according to claim 11, **characterised in that** the contact elements and the contact counter-elements can be slid into one another forming a contact when the cover (48) is placed on the housing (4).

## Revendications

1. Dispositif de chauffage électrique (2) avec au moins un élément de chauffage électrique (18) et au moins un creux en U (16) dans lequel est logé celui-ci et qui délimite une chambre de circulation (10) traversée par l'écoulement d'un agent et présentant une ouverture d'admission (6) pour l'introduction de l'agent dans la chambre de circulation (10), et une ouverture de sortie (8) pour évacuer de la chambre de circulation (10) l'agent chauffé,
**caractérisé par** un boîtier oblong (4) dans lequel est formée une cloison (12) qui divise ledit boîtier (4) en une chambre de chauffage (14) et la chambre de circulation (10) et dans laquelle plusieurs creux en U (16) disposés parallèlement les uns derrière les autres dans le sens de la largeur du boîtier (4), s'étendant dans le sens longitudinal du boîtier (4) et formés par la cloison (12) s'enfoncent en direction d'un fond du boîtier (4), lesquels creux (16) sont entourés des deux côtés par l'écoulement de l'agent et sont ouverts en direction de la chambre de chauffage (14), étant précisé qu'il est prévu entre l'une des branches (30) du creux en U (16) et l'élément de chauffage électrique (18) un élément de pression (32) qui est appliqué à plat contre un élément de chauffage PTC (22) qui forme l'élément de chauffage électrique (18) et contre la branche (30).

2. Dispositif de chauffage électrique selon la revendication 1, **caractérisé en ce que** l'épaisseur de l'élément de chauffage électrique (18) correspond à peu près à l'épaisseur du creux (16).

3. Dispositif de chauffage électrique selon la revendication 1, **caractérisé en ce que** les creux (16) s'enfoncent avec la même profondeur de pénétration dans la chambre de circulation (10).

4. Dispositif de chauffage électrique selon l'une des revendications précédentes, **caractérisé en ce que** plusieurs éléments de chauffage électriques (18) sont logés dans chacun des creux (16), les uns derrière les autres dans le sens longitudinal du creux.

5. Dispositif de chauffage électrique selon l'une des revendications précédentes, **caractérisé en ce que** l'élément de chauffage électrique est posé à la verticale sur une branche centrale du creux en U.

6. Dispositif de chauffage électrique selon l'une des revendications précédentes, **caractérisé en ce que** l'élément de pression (32) est conçu comme une plaque en forme de coin avec une bonne conductibilité thermique, et **en ce que** l'élément de chauffage électrique (18) est appliqué, à plat et avec une contrainte fournie par l'élément de pression, contre l'autre branche (28) du creux en U (16).

7. Dispositif de chauffage électrique selon l'une des revendications précédentes, **caractérisé en ce que** l'élément de chauffage électrique (18) comprend deux plaques isolantes électriquement (20) disposées parallèlement l'une par rapport à l'autre, au moins un élément de chauffage PTC (22) disposé entre ces plaques (20), et deux tôles de contact (24) qui sont appliquées des deux côtés contre ledit élément de chauffage PTC (22) et qui sont disposées entre celui-ci et les plaques isolantes électriquement (20).

8. Dispositif de chauffage électrique selon la revendication 7, **caractérisé en ce que** les tôles de contact (24) présentent chacune des parties de prolongement (26) opposées en diagonale, qui dépassent de l'extrémité supérieure des plaques isolantes électriquement (20), étant précisé que la taille de la surface des tôles de contact disposées entre les plaques isolantes (20) correspond à la surface extérieure, dirigée vers le côté intérieur de la plaque isolante (20), dudit élément de chauffage PTC (22).

9. Dispositif de chauffage électrique selon la revendication 8, **caractérisé en ce que** les extrémités supérieures de chaque partie de prolongement des éléments de chauffage électriques (18) disposés dans le creux (16) sont disposées à la même hauteur, et il est prévu dans la zone des parties de prolongement au moins une surface d'appui (43) pour une carte imprimée (36) qui présente sur son côté inférieur tourné vers les parties de prolongement (26) des logements de contact (38) dans lesquels lesdites parties de prolongement (26) peuvent être glissées.

10. Dispositif de chauffage électrique selon la revendication 9, **caractérisé en ce que** le logement de contact (38) pour les parties de prolongement (26) de plusieurs éléments de chauffage électriques (18) disposés en ligne les uns derrière les autres est formé par des tôles de contact qui se font face et qui sont appliquées avec une contrainte contre lesdites parties de prolongement (26).

11. Dispositif de chauffage électrique selon l'une des revendications précédentes, **caractérisé en ce qu'**il comprend par ailleurs un recouvrement (48) qui présente un raccordement de courant et de signaux, grâce auquel la chambre de chauffage (14) est étanche et qui porte des éléments de contact opposés coopérant avec des éléments de contact formés sur le côté supérieur de la carte imprimée.

12. Dispositif de chauffage électrique selon la revendication 11, **caractérisé en ce que** les éléments de contact et les éléments de contact opposés, lors de la pose du recouvrement (48) sur le boîtier (4), sont aptes à être glissés les uns dans les autres en réalisant un contact.
